# EUROPÄISCHE PATENTSCHRIFT

(11) **EP 1 925 515 B1**
(45) Veröffentlichungstag und Bekanntmachung des Hinweises auf die Patenterteilung: **17.12.2008**
(21) Anmeldenummer: 07022680.8
(22) Anmeldetag: 22.11.2007
(51) Int. Cl.: B60T 8/17, B60T 8/1755

(54) **Verfahren zur Verringerung von Schlingerbewegungen von Fahrzeuganhängern**
Method for reducing fishtailing movement of vehicle trailers
Procédé destiné à la réduction de déplacements en lacets de remorques de véhicules

(30) Priorität: 23.11.2006 DE 102006055365
(43) Veröffentlichungstag der Anmeldung: 28.05.2008
(73) Patentinhaber: Knott GmbH, D-83125 Eggstätt (DE)
(72) Erfinder: Strasser, Josef, 83257 Gstadt am Chiemsee (DE)
(74) Vertreter: Bauer, Friedrich

(56) Entgegenhaltungen:
- EP-A- 1 375 279
- WO-A-02/06101
- DE-A1- 10 225 120
- DE-A1- 19 964 048

## Beschreibung

Die Erfindung betrifft ein Verfahren zur Verringerung von Schlingerbewegungen von Fahrzeuganhängern mit Radbremsen durch gleichzeitiges Zuspannen der links- und rechtsseitigen Radbremsen gemäß dem Oberbegriff des Anspruches 1.

Fahrzeuganhänger wie Wohnwägen, Bootsanhänger, Marktanhänger etc. werden bekanntermaßen bei widrigen Umständen und hohen Geschwindigkeiten unruhig und neigen zum Schlingern. Da hierdurch gefährliche Fahrzustände herbeigeführt werden können und eine hohe Materialbeanspruchung auftritt, sind bereits verschiedenste Verfahren und Technologien entwickelt worden, um die Schlingerneigung eines Fahrzeuganhängers zu unterdrücken bzw. zu dämpfen.

Ein bekannter Ansatzpunkt besteht darin, dass im Bereich der Kugelkopfkupplung zuspannbare Reibelemente vorgesehen werden, die beim Auftreten von Schlingerbewegungen zugespannt werden und die Reibung zwischen Anhängerkupplung und Kugelkopf erhöhen.

Ein anderes bekanntes Verfahren besteht darin, dass die Radbremsen im Fall von Schlingerbewegungen zugespannt werden, um das Gespann zu strecken und damit in die neutrale Mittelstellung zu zwingen. Hierzu spannen bei den meisten am Markt befindlichen Systemen mit aktivem Bremseingriff die Bremsen beidseitig und in gleicher Stärke zu, wie in den Dokumenten EP 1 375 279 und WO 0 206 101 offenbart. Da das innere Rad in Folge der Wankbewegung entlastet wird, muss der Bremseingriff auf Blockierung der Räder überwacht und bei Erkennung einer solchen zurückgenommen werden. Sofort nach Ende der erkannten Blockierung wird der Bremsdruck bei den bekannten Verfahren wieder auf den erhöhten Zuspanndruck angehoben. Nachteil dieser Verfahren ist jedoch, dass Schlingerbewegungen häufig nicht in der gewünschten effektiven Weise reduziert werden können.

Weiterhin sind Systeme bekannt, bei denen der Bremseingriff so schwach ausgeführt wird (nur ca. 10% Anhängerverzögerung), dass die Wahrscheinlichkeit eines Blockierens sehr gering ist.

Ferner sind Verfahren zur Verringerung von Schlingerbewegungen bekannt, bei denen die Bremskraft auf der linken und rechten Anhängerseite seitlich versetzt aufgebracht wird, wobei die Zuspannkraft der Radbremsen mit positiver Phasenvoreilung differenziell eingesteuert wird (z.B. Dokumente DE 19 964 048 oder DE 10 225 120). Hierzu müssen jedoch neben den exakten Anhängerparametern, wie z.B. Eigenfrequenz um die Hochachse, auch sämtliche Zeitfaktoren der Bremsanlage wie Totzeit, Hysteresen etc. bekannt sein. Nachteilig ist weiterhin, dass sich die Parameter des Fahrzeuganhängers, wie z.B. Eigenfrequenz, Wankpol etc. durch geänderten Reifenluftdruck oder unterschiedliche Beladung ändern, wobei sich neben dem Gewicht auch die Schwerpunktlage und Höhe des Fahrzeuganhängers drastisch ändern können. Weiterhin können diese Parameter auch durch ein anderes Zugfahrzeug mit höherer oder niedrigerer Masse bzw. einer steiferen oder weicheren Achsaufhängung sehr stark verändert werden. Ferner können sich auch unterschiedliche Totzeiten für das Ansteuern der verschiedenen Anhängerseiten ergeben, wenn die Bremsleitungen bzw. Seilzüge asymmetrisch im Fahrzeug verlegt sind. All diese geänderten Parameter können zu erheblichen Phasenverschiebungen des eingesteuerten Bremseingriffes führen, wodurch die Schlingerbewegungen des Anhängers unter Umständen noch verstärkt anstatt reduziert werden. Weiterhin sind derartige phasenverschobene Bremseingriffe nur mit erheblichem technischen Aufwand realisierbar.

Der Erfindung liegt daher die Aufgabe zugrunde, ein Verfahren der eingangs genannten Art zu schaffen, welches auf möglichst einfache und wirkungsvolle Weise Schlingerbewegungen von Fahrzeuganhängern reduziert.

Diese Aufgabe wird erfindungsgemäß durch ein Verfahren mit den Merkmalen des Anspruches 1 gelöst. Vorteilhafte Ausführungsformen der Erfindung sind in den weiteren Ansprüchen beschrieben.

Bei dem erfindungsgemäßen Verfahren werden die Radbremsen beim Auftreten einer Schlingerbewegung zum Zeitpunkt des Nulldurchgangs der Auslenkung der Schlingerbewegung oder zeitnah zu diesem Zeitpunkt beidseitig zugespannt und spätestens zum Zeitpunkt der jeweils nachfolgenden größten Amplitude der Auslenkung der Schlingerbewegung wieder gelöst. Weiterhin wird, wenn aufgrund einer Blockierneigung eines Rads ein vorbestimmter Radschlupf detektiert wird, der Bremsdruck sowohl für die linksseitigen als auch rechtsseitigen Radbremsen langsam innerhalb von 0,1 bis 0,5 Sekunden bis zur Aufhebung der Bremswirkung zurückgenommen.

Für das erfindungsgemäße Verfahren ist es somit charakteristisch, dass beim Auftreten einer Schlingerbewegung des Fahrzeuganhängers, die üblicherweise durch einen Gierraten- oder Beschleunigungssensor erfasst wird, die links-und rechtsseitigen Räder des Fahrzeuganhängers beidseitig und gleichmäßig abgebremst werden, wobei das Zuspannen der Radbremsen jedoch immer erst zeitnah zum Zeitpunkt des Nulldurchgangs der Auslenkung der Schlingerbewegung erfolgt und der Bremseingriff maximal solange aufrechterhalten wird, bis die jeweils nachfolgende größte Amplitude der Schlingerbewegung erreicht wird. Der hierbei eingesteuerte Bremsdruck entspricht einer deutlichen Verzögerung des Fahrzeuganhängers, beispielsweise 20 bis 40%, insbesondere ca. 30%, bezogen auf den Anhänger. Dies entspricht bei einer Massengleichheit von Fahrzeuganhänger und Zugfahrzeug einer Verzögerung des Zuges von ca. 10 bis 20%, insbesondere von ca. 15%. Hat die Auslenkung der Schlingerbewegung die größte Amplitude, d.h. die größte seitliche Auslenkung des Fahrzeuganhängers, überschritten, wird in jedem Fall der Bremsdruck beidseitig, vorzugsweise bis auf den Bremsenanlegedruck, zurückgenommen. Dies verhindert, dass beim Zurückschwingen Bremskräfte aufgebracht werden, die die Schlingerbewegung des Fahrzeuganhängers sogar noch verstärken könnten.

Da der schlingernde Fahrzeuganhänger beim Schwingen das innere Rad entlastet und das äußere Rad belastet, kann insbesondere das innere Rad an seine Blockiergrenze kommen. Gemäß dem erfindungsgemäßen Verfahren wird daher die Blockierneigung der Räder des Fahrzeuganhängers überwacht und - wenn ein vorbestimmter Radschlupf detektiert wird - der Bremsdruck auf beiden Seiten langsam zurückgenommen. Die Blockiererkennung ist dabei so ausgelegt, dass diese erst bei sehr hohen Schlupfwerten, insbesondere ab ca. 40 oder 50% anspricht. Der Radschlupf kann beispielsweise durch eine Rad-Drehwinkelverzögerung oder durch Vergleich der tatsächlichen Umdrehungsgeschwindigkeit eines Rades mit einer Vergleichsumdrehungsgeschwindigkeit ermittelt werden, welche das Rad aufgrund der Fahrgeschwindigkeit des Fahrzeuganhängers einnehmen müsste. Wird nun an einem Rad eine Blockierneigung erkannt, wird der Bremsdruck im Gegensatz zu bekannten Antiblockiersystemen nur sehr gemächlich, nämlich innerhalb von 0,1 bis 0,5 Sekunden, bis zur Aufhebung der Bremswirkung, vorzugsweise bis auf den Anlegedruck der Radbremsen, zurückgenommen. Die Zurücknahme des Bremsdrucks erfolgt damit wesentlich langsamer als bei Antiblockiersystemen, bei denen der Bremsdruck nach der Blockiererkennung meist innerhalb von wenigen Millisekunden reduziert und sofort danach wieder aufgebaut wird (nur auf diese Weise lassen sich dort die geforderten Regelfrequenzen von ca. 10 Hz realisieren).

Beim erfindungsgemäßen Verfahren wird somit bewusst in Kauf genommen, dass das innere Rad einen sehr hohen Schlupf aufweist, da hierdurch eine effektive Bremswirkung zustande kommt und der Schlupf am belasteten äußeren Rad in der Regel wesentlich geringer ist. Hierdurch wird vermieden, dass die Bremswirkung am äußeren Rad und damit die gewünschten Rückstellkräfte in unerwünschter Weise reduziert werden.

Während des Zurückschwingens des Fahrzeugs von der maximalen Auslenkung bis ca. zur Mittellage sind die Radbremsen somit nicht oder kaum zugespannt, so dass die Anhängerschwingung in dieser Zeitphase keine zusätzliche Energie zugeführt bekommt.

Die Zurücknahme des Bremsdrucks beim Erkennen einer Blockierneigung hat in jedem Fall Vorrang. Dies bedeutet, dass der Bremsdruck auch vor Erreichen der maximalen Amplitude der Schlingerbewegung zurückgenommen wird, falls vorher eine Blockierneigung eines Rades detektiert wird.

Beim erfindungsgemäßen Verfahren handelt es sich somit um eine im Takt der Anhängerschwingung pulsierende Bremsenzuspannung, wobei die Radbremsen beidseitig gleichmäßig lediglich in einem Schwingungsbereich zugespannt werden, der zwischen den Nulldurchgängen und den maximalen Amplituden der Schlingerbewegung liegt. Die Zuspannkraft der Radbremsen pulsiert dabei zwischen dem errechneten Bremsdruck und vorzugsweise dem Anlegedruck der Radbremsen.

Gemäß einer vorteilhaften Ausführungsform erfolgt die Zurücknahme des Bremsdrucks beim Detektieren einer Blockierneigung eines Rades während einer Zeitdauer von 0,1 bis 0,3 Sekunden, insbesondere 0,15 bis 0,25 Sekunden.

Gemäß einer weiteren vorteilhaften Ausführungsform der Erfindung erfolgt die Zurücknahme des Bremsdrucks beim Detektieren einer Blockierneigung eines Rades bei einem Radschlupf über 40%, insbesondere über 50%.

Das erfindungsgemäße Verfahren wird nachfolgend anhand einer Zeichnung beispielhaft näher erläutert, welche die Schlingerbewegung des Fahrzeuganhängers und den aufgebrachten Bremsdruck in Abhängigkeit der Zeit zeigt.

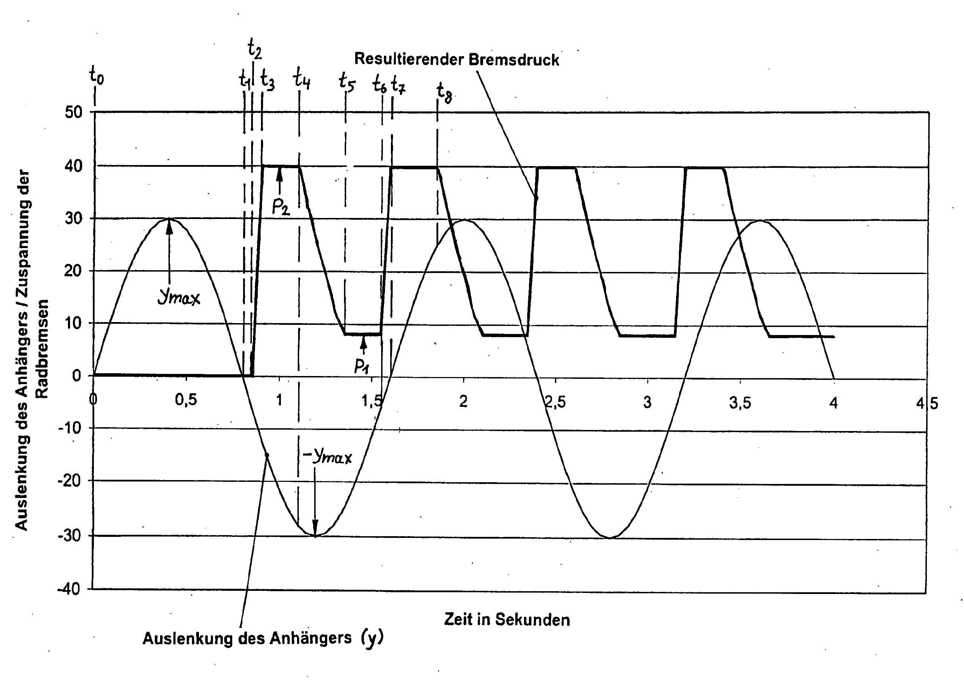

In der Zeichnung lediglich schematisch der Anfang der Schlingerbewegung während eines Zeitraums von 4 Sekunden dargestellt, wobei die in Wirklichkeit stattfindende Verringerung der Schlingerbewegung nach Einsetzen der pulsierenden Bremszuspannung nicht berücksichtigt ist. Die Schlingerbewegung kann durch einen Querbeschleunigungs- bzw. Gierratensensor erfasst werden, der am Fahrzeuganhänger angeordnet ist. Der Nulldurchgang der Schlingerbewegung, d.h. wenn sich der Fahrzeuganhänger in der Mittelachse des Gespanns befindet, liegt beim Ordinatenwert 0.

Das Diagramm zeigt weiterhin eine Bremsdruckkurve, die angibt, welcher Bremsdruck an den Radbremsen anliegt. Zweckmäßigerweise handelt es sich hierbei um einen Bremsdruck, der auf hydraulische Weise aufgebracht wird. Alternativ hierzu ist jedoch auch eine pneumatische oder mechanische Bremsdruckerzeugung denkbar. Der zur Verringerung der Schlingerbewegungen aufgebrachte Bremsdruck ist auf beiden Seiten des Anhängers gleich.

Wie ersichtlich, ist zum Zeitpunkt t₀ der an den Radbremsen anliegende Bremsdruck gleich 0, d.h. die Bremsen sind gelöst. Tritt eine Schlingerbewegung des Fahrzeuganhängers auf, wie durch die erste Halbschwingung im Diagramm dargestellt, so erkennt der Schlingersensor bereits beim ersten Nulldurchgang der Schlingerbewegung zum Zeitpunkt t₁, dass eine Schlingerbewegung vorliegt. Im vorliegenden Ausführungsbeispiel wird somit bereits nach ca. 0,8 Sekunden ein Schlingern des Fahrzeuganhängers detektiert und ein erster Bremsvorgang ausgelöst. Aufgrund der dem Bremssystem immanenten Totzeit, die im gezeigten Ausführungsbeispiel lediglich bei ca. 0,08 Sekunden liegt, wird der Bremsdruck ab dem Zeitpunkt t₂ an den Radbremsen erhöht, bis er zum Zeitpunkt t₃ den errechneten maximalen Bremsdruck p₂ erreicht hat.

Der maximale Bremsdruck p₂ wird im gezeigten Ausführungsbeispiel solange aufrecht erhalten, bis sich die Auslenkung des Fahrzeuganhängers kurz vor der maximalen Auslenkung -yₘₐₓ befindet. Dies entspricht dem Zeitpunkt t₄. Die Zeitdauer zwischen t₃ und t₄ beträgt etwa 0,25 Sekunden. Anschließend wird der Bremsdruck bis auf einen Wert p₁ reduziert, der zum Zeitpunkt t₅ erreicht wird. Diese Reduzierung des Bremsdrucks erfolgt relativ langsam innerhalb von 0,2 bis 0,3 Sekunden. Der reduzierte Bremsdruck p₁ entspricht dem Bremsenanlagedruck, d.h. demjenigen Bremsdruck, der erforderlich ist, um die Bremsen gerade noch in minimalem Bremseingriff zu halten, ohne dass eine eigentliche Bremswirkung ausgeübt wird.

Der reduzierte Bremsdruck p₁ wird für etwa 0,2 Sekunden bis zum Zeitpunkt t₆ beibehalten. Im Zeitpunkt t₆ befindet sich die Schlingerbewegung des Fahrzeuganhängers kurz vor dem nächsten Nulldurchgang. Ab dem Zeitpunkt t₆ wird der Bremsdruck wieder bis zum errechneten maximalen Bremsdruck p₂ erhöht, der zum Zeitpunkt t₇ erreicht wird. Dieser Zeitpunkt t₇ entspricht wieder dem Nulldurchgang der Schlingerbewegung.

Der maximale Bremsdruck p₂ wird aufrechterhalten, bis sich die Schlingerbewegung wiederum kurz vor dem nächsten Maximalwert yₘₐₓ befindet. Anschließend wird der Bremsdruck wieder auf den reduzierten Wert p₁ abgesenkt und gehalten, wie zwischen den Zeitpunkten t₄ und t₆ beschrieben.

Das pulsierende Erhöhen und Reduzieren des Bremsdrucks auf beiden Seiten des Fahrzeuganhängers wiederholt sich solange, bis die Schlingerbewegung des Fahrzeuganhängers vollständig abgeklungen ist. Hierbei wird der Bremsdruck im Takt der Schlingerbewegung immer zu einem Zeitpunkt erhöht, wenn sich die Schlingerbewegung in der Nähe des Nulldurchgangs befindet, und der erhöhte Bremsdruck immer nur bis maximal zur jeweils nachfolgenden maximalen Auslenkung beibehalten. Der Begriff "in der Nähe des Nulldurchgangs" bzw. "zeitnah zum Zeitpunkt des Nulldurchgangs" bedeutet hierbei, dass der Zeitpunkt des Beginns des Bremsdruckaufbaus näher am Zeitpunkt des benachbarten Nulldurchgangs der Auslenkung der Schlingerbewegung als am Zeitpunkt der vorausgehenden oder nachfolgenden maximalen Amplitude yₘₐₓ, -yₘₐₓ liegt. Beispielsweise kann der Beginn des Bremsdruckaufbaus in einem Bereich von 0-0,1 Sekunden vor dem Zeitpunkt des Nulldurchgangs der Auslenkung bis 0-0,1 Sekunden nach diesem Zeitpunkt liegen.

Detektiert das Antiblockiersystem eine Neigung eines Rades (meist des inneren Rades) zum Blockieren, so wird der Bremsdruck sofort, jedoch ebenfalls relativ langsam innerhalb von beispielsweise ca. 0,2 Sekunden auf den reduzierten Bremsdruck p₁ abgesenkt.

## Patentansprüche

1. Verfahren zur Verringerung von Schlingerbewegungen von Fahrzeuganhängern mit Radbremsen durch gleichzeitiges Zuspannen der links- oder rechtsseitigen Radbremsen im Fall des Auftretens von Schlingerbewegungen, **dadurch gekennzeichnet, dass** die Radbremsen zum Zeitpunkt des Nulldurchgangs (t₁, t₇) der Auslenkung (y) der Schlingerbewegung oder zeitnah zu diesem Zeitpunkt (t₁, t₇) beidseitig zugespannt und spätestens zum Zeitpunkt der jeweils nachfolgenden größten Amplitude (yₘₐₓ, -yₘₐₓ) der Auslenkung (y) der Schlingerbewegung wieder gelöst werden,
und dass, wenn aufgrund einer Blockierneigung eines Rades ein vorbestimmter Radschlupf detektiert wird, der Bremsdruck gleichmäßig sowohl für die linksseitigen als auch rechtsseitigen Radbremsen langsam innerhalb von 0,1 bis 0,5 Sekunden bis zur Aufhebung der Bremswirkung zurückgenommen wird.

2. Verfahren nach Anspruch 1, **dadurch gekennzeichnet, dass** die Zurücknahme des Bremsdrucks beim Detektieren einer Blockierneigung eines Rades während einer Zeitdauer von 0,1 bis 0,3 Sekunden erfolgt.

3. Verfahren nach Anspruch 2, **dadurch gekennzeichnet, dass** die Zurücknahme des Bremsdrucks beim Detektieren einer Blockierneigung eines Rades während einer Zeitdauer von 0,15 Sekunden bis 0,25 Sekunden erfolgt.

4. Verfahren nach einem der vorhergehenden Ansprüche, **dadurch gekennzeichnet, dass** die Zurücknahme des Bremsdrucks beim Detektieren einer Blockierneigung eines Rades bei einem Radschlupf über 40% erfolgt.

5. Verfahren nach Anspruch 4, **dadurch gekennzeichnet, dass** die Zurücknahme des Bremsdrucks beim Detektieren einer Blockierneigung eines Rades bei einem Radschlupf über 50% erfolgt.

6. Verfahren nach einem der vorhergehenden Ansprüche, **dadurch gekennzeichnet, dass** beim Detektieren eines Radschlupfs der Bremsdruck bis auf den Bremsenanlagedruck zurückgenommen wird.

## Claims

1. Method for reducing fishtailing movements of vehicle trailers with wheel brakes through simultaneously stretching the left or right-sided wheel brakes in the event of fishtailing movements occurring, **characterized in that** both sides of the wheel brakes are stretched at the time point of zero crossing (t₁, t₇) of the deflection (y) of the fishtailing movement or in real time at this time point (t₁, t₇) and released again at the latest at the time point of the respective succeeding largest amplitude (yₘₐₓ, -yₘₐₓ) of the deflection (y) of the fishtailing movement, and **in that** the brake pressure is constantly withdrawn both for the left-sided and right-sided wheel brakes slowly within 0.1 to 0.5 seconds until the cancellation of the braking action if a predetermined wheel slip due to a blocking inclination of a wheel is detected.

2. Method according to Claim 1, **characterized in that** the withdrawal of the brake pressure takes place during a period of 0.1 to 0.3 seconds if a blocking inclination of a wheel is detected.

3. Method according to Claim 2, **characterized in that** the withdrawal of the brake pressure takes place during a period of 0.15 seconds to 0.25 seconds if a blocking inclination of a wheel is detected.

4. Method according to any one of the preceding claims, **characterized in that** the withdrawal of the brake pressure takes place in the event of a wheel slip of more than 40% if a blocking inclination of a wheel is detected.

5. Method according to Claim 4, **characterized in that** the withdrawal of the brake pressure takes place in the event of a wheel slip of more than 50% if a blocking inclination of a wheel is detected.

6. Method according to any one of the preceding claims, **characterized in that** the brake pressure is withdrawn as far as the brake system pressure if a wheel slip is detected.

## Revendications

1. Procédé pour réduire les mouvements de lacets de remorques de véhicules comprenant des freins de roues, par serrage simultané des freins de roues du côté droit ou du côté gauche dans le cas de l'apparition de mouvements de lacets, **caractérisé en ce que** les freins de roues sont serrés des deux côtés à l'instant du passage par zéro (t₁, t₇) du déport (y) du mouvement de lacet ou à un instant proche de cet instant (t₁, t₇), et sont à nouveau relâchés au plus tard à l'instant de l'amplitude maximum respectivement successive (yₘₐₓ, -yₘₐₓ) du déport (y) du mouvement de lacet,
et **en ce que**, si en raison d'une tendance au blocage d'une roue on détecte un glissement prédéterminé d'une roue, la pression de freinage est diminuée de façon égale aussi bien pour les freins de roues du côté gauche que pour ceux du côté droit, lentement à l'intérieur d'une période de 0,1 à 0,5 secondes jusqu'à annulation de l'effet de freinage.

2. Procédé selon la revendication 1, **caractérisé en ce que** la diminution de la pression de freinage a lieu lors de la détection d'une tendance au blocage d'une roue pendant une période de 0,1 à 0,3 secondes.

3. Procédé selon la revendication 2, **caractérisé en ce que** la diminution de la pression de freinage a lieu lors de la détection d'une tendance au blocage d'une roue pendant une période de 0,15 à 0,25 secondes.

4. Procédé selon l'une des revendications précédentes, **caractérisé en ce que** la diminution de la pression de freinage a lieu lors de la détection d'une tendance au blocage d'une roue pour un glissement de la roue qui dépasse 40 %.

5. Procédé selon la revendication 4, **caractérisé en ce que** la diminution de la pression de freinage a lieu lors de la détection d'une tendance au blocage d'une roue pour un glissement de la roue qui dépasse 50 %.

6. Procédé selon l'une des revendications précédentes, **caractérisé en ce que** la pression de freinage est diminuée jusqu'à la pression de contact des freins lors de la détection d'un glissement de la roue.
